# EUROPEAN PATENT APPLICATION

(11) **EP 3 528 404 A1**
(43) Date of publication of application: **21.08.2019**
(21) Application number: 17859918.9
(22) Date of filing: 13.09.2017
(51) Int. Cl.: H04B 13/00, H04B 17/19, H04B 17/29

(54) **COMMUNICATIONS DEVICE AND COMMUNICATIONS SYSTEM**

(30) Priority: 13.10.2016 JP 2016201751
(71) Applicant: Sony Semiconductor Solutions Corporation, Atsugi-shi, Kanagawa 243-0014 (JP)
(72) Inventor: KOBAYASHI, Kenichi, Atsugi-shi Kanagawa 243-0014 (JP)
(74) Representative: MFG Patentanwälte Meyer-Wildhagen Meggle-Freund Gerhard PartG mbB
(86) International application number: PCT/JP2017/032960
(87) International publication number: WO 2018/070168

(57) **Abstract**

A communication unit according to the present disclosure includes: an antenna section; a reception circuit section that receives reception data from a communicated unit through the antenna section; a transmission circuit section that transmits transmission data to the communicated unit through the antenna section; a switching section that switches electrical coupling relationships between the antenna section, the reception circuit section, and the transmission circuit section; a measuring section that measures a signal delay amount of the reception circuit section; and a control section that, in a case where the measuring section measures the signal delay amount, controls the switching section to cause the reception circuit section and the transmission circuit section to be electrically coupled to each other.

## Description

### Technical Field

The present disclosure relates to a communication unit and a communication system that are suitable for communication using a human body as a communication medium.

### Background Art

There is known a communication system that utilizes an electric field communication technique using, for example, a human body as a communication medium. In such a communication system, a communicated unit and a communication unit transmit and receive reception data and transmission data between them, for example, in each time-segment including a plurality of time slots. The communication unit includes a reception circuit section that receives the reception data and a transmission circuit section that transmits the transmission data.

### Citation List

### Patent Literature

PTL 1: Japanese Unexamined Patent Application Publication No. 2004-357015
PTL 2: Japanese Unexamined Patent Application Publication No. 2008-532350

### Summary of the Invention

In the communication system described above, the communicated unit and the communication unit may need to synchronize time slots between them. For example, a circuit delay of the reception circuit section causes deviation of time slot synchronization, which may lead to a delay in transmission timing of transmission data.

It is desirable to provide a communication unit and a communication system that make it possible to correct an influence of a circuit delay of a reception circuit section.

A communication unit according to an embodiment of the present disclosure includes: an antenna section; a reception circuit section that receives reception data from a communicated unit through the antenna section; a transmission circuit section that transmits transmission data to the communicated unit through the antenna section; a switching section that switches electrical coupling relationships between the antenna section, the reception circuit section, and the transmission circuit section; a measuring section that measures a signal delay amount of the reception circuit section; and a control section that, in a case where the measuring section measures the signal delay amount, controls the switching section to cause the reception circuit section and the transmission circuit section to be electrically coupled to each other.

A communication system according to an embodiment of the present disclosure includes a first communication unit and a second communication unit that transmits transmission data to the first communication unit. One or both of the first communication unit and the second communication unit includes an antenna section, a reception circuit section that receives reception data from the first communication unit or the second communication unit that is a communicated unit through the antenna section, a transmission circuit section that transmits transmission data to the communicated unit through the antenna section, a switching section that switches electrical coupling relationships between the antenna section, the reception circuit section, and the transmission circuit section, a measuring section that measures a signal delay amount of the reception circuit section, and a control section that, in a case where the measuring section measures the signal delay amount, controls the switching section to cause the reception circuit section and the transmission circuit section to be electrically coupled to each other.

In the communication unit or the communication system according to the embodiment of the present disclosure, the electrical coupling relationships between the antenna section, the reception circuit section, and the transmission circuit section are switched by the switching section. A signal delay amount of the reception circuit section is measured by the measuring section. In a case where the measuring section measures the signal delay amount, the switching section is controlled to cause the reception circuit section and the transmission circuit section to be electrically coupled to each other.

According to the communication unit or the communication system of the embodiment of the present disclosure, it allows electrical coupling between the reception circuit section and the transmission circuit section and measurement of a signal delay amount of the reception circuit section; therefore, it is possible to correct an influence of a circuit delay of the reception circuit section. For example, it may be possible to correct a delay in transmission timing of transmission data caused by the circuit delay of the reception circuit section.

It is to be noted that the effects described here are not necessarily limitative, and may be any of effects described in the present disclosure.

### Brief Description of Drawings

FIG. 1 is a configuration diagram illustrating an outline of a communication system according to Comparative Example using a human body as a communication medium.
FIG. 2 is a configuration diagram illustrating the outline of the communication system according to Comparative Example.
FIG. 3 is an explanatory diagram illustrating an example of a transmission format in the communication system according to Comparative Example.
FIG. 4 is an explanatory diagram illustrating an issue of the communication system according to Comparative Example.
FIG. 5 is a block diagram schematically illustrating a configuration example of a communication unit according to a first embodiment of the present disclosure.
FIG. 6 is a block diagram schematically illustrating an example of switching control of a switching section in the communication unit according to the first embodiment.
FIG. 7 is an explanatory diagram illustrating an outline of transmission control in the communication unit according to the first embodiment.
FIG. 8 is a flowchart schematically illustrating an example of a control flow about the transmission control by the communication unit according to the first embodiment.
FIG. 9 is a flowchart schematically illustrating an example of a control flow about the transmission control by the communication unit according to the first embodiment.
FIG. 10 is a block diagram schematically illustrating a configuration example of a communication unit according to a second embodiment of the present disclosure.
FIG. 11 is a flowchart schematically illustrating an example of a control flow about transmission control by the communication unit according to the second embodiment.
FIG. 12 is a flowchart that continues from FIG. 11.
FIG. 13 is a flowchart schematically illustrating an example of a control flow about transmission control by a communication unit according to a third embodiment.
FIG. 14 is a block diagram schematically illustrating a configuration example of a communication unit according to a fourth embodiment.
FIG. 15 is a block diagram schematically illustrating an example of switching control by a switching section in the communication unit according to the fourth embodiment.
FIG. 16 is a block diagram schematically illustrating a configuration example of a communication unit according to a fifth embodiment.
FIG. 17 is a block diagram schematically illustrating an example of switching control by a switching section in the communication unit according to the fifth embodiment.
FIG. 18 is a block diagram depicting an example of schematic configuration of a vehicle control system.
FIG. 19 is a diagram of assistance in explaining an example of installation positions of an outside-vehicle information detecting section and an imaging section.

### Modes for Carrying Out the Invention

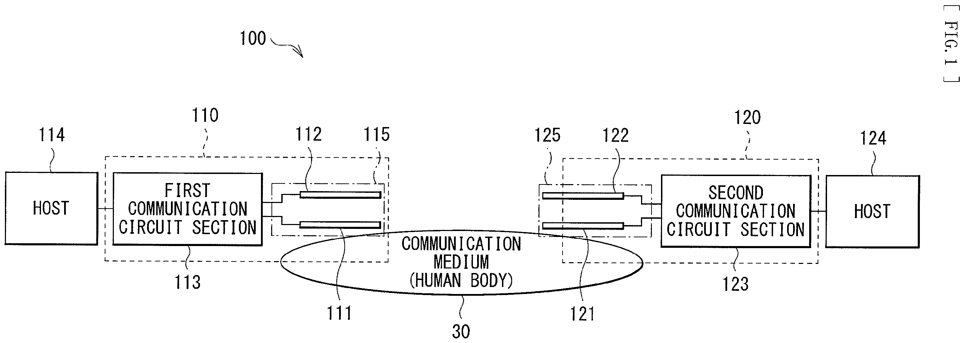

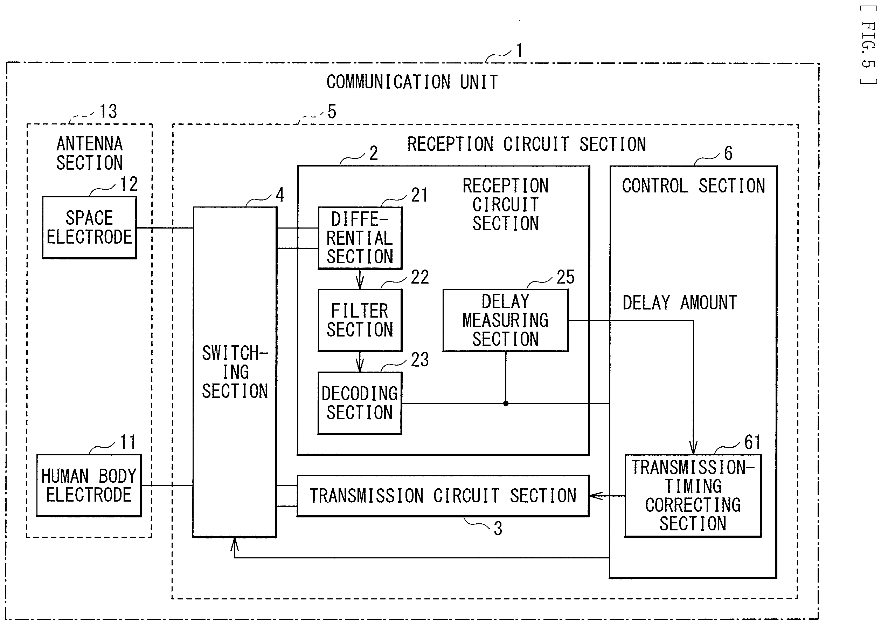

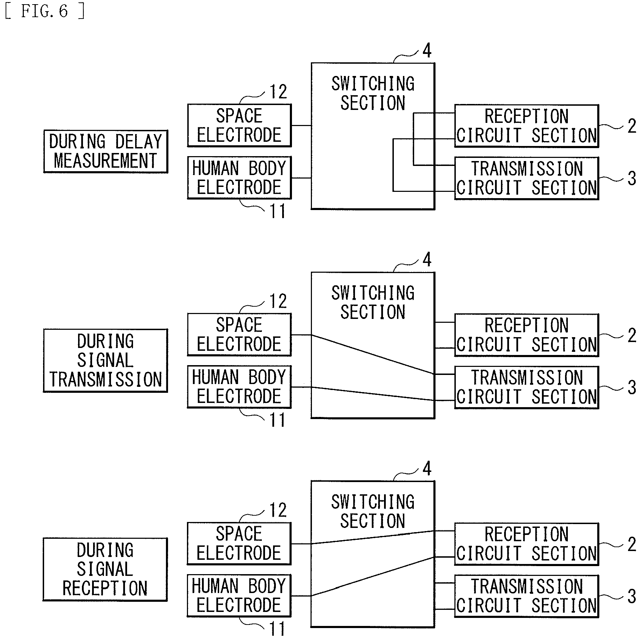

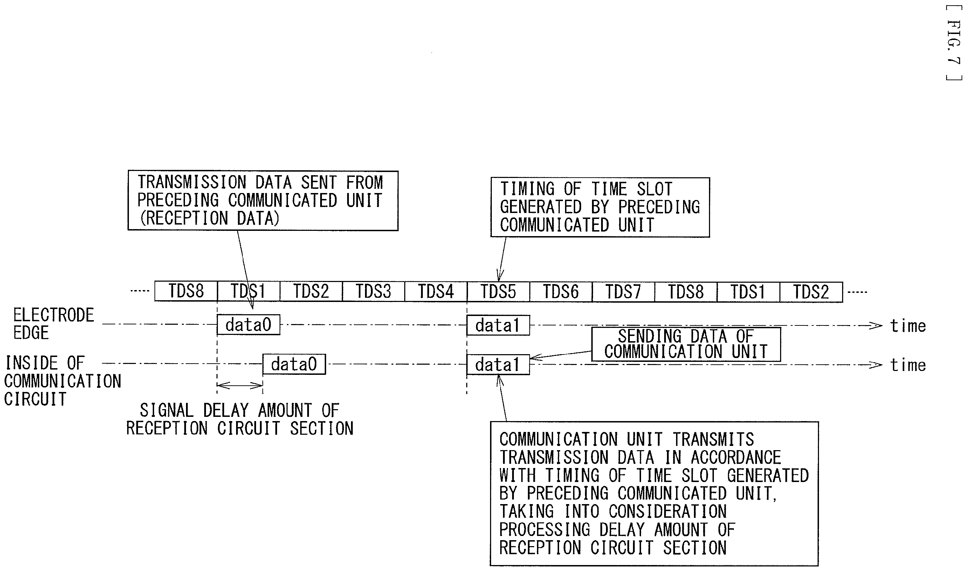

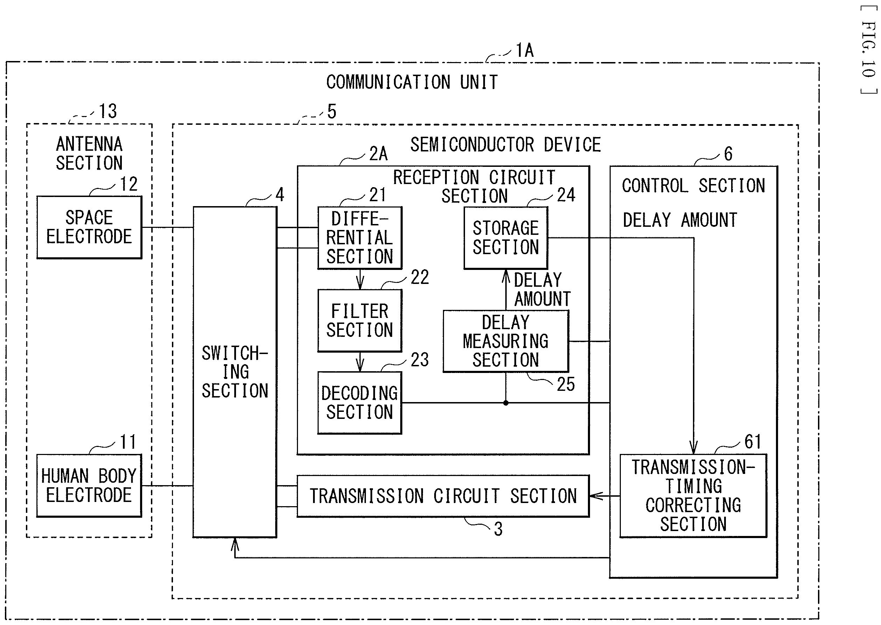

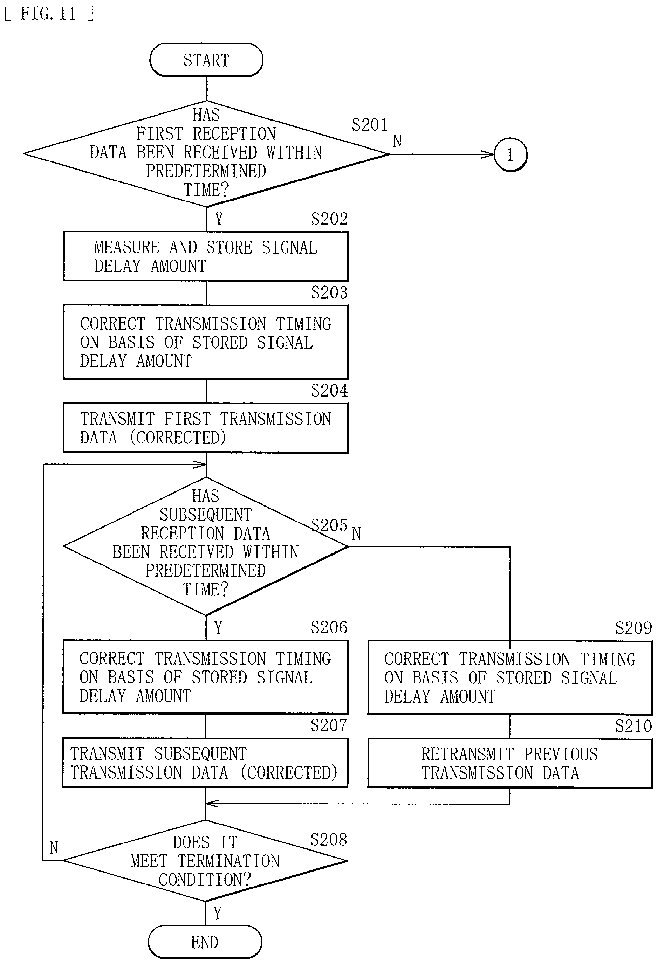

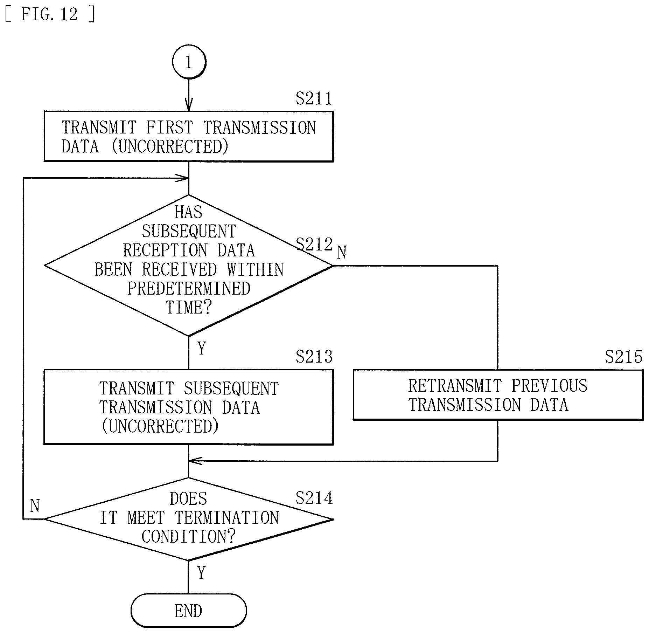

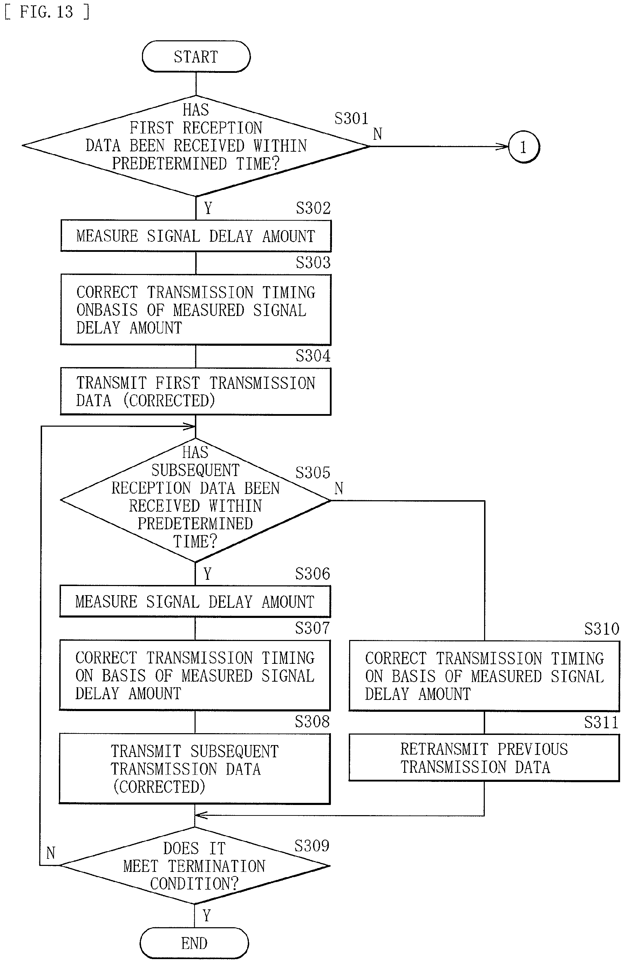

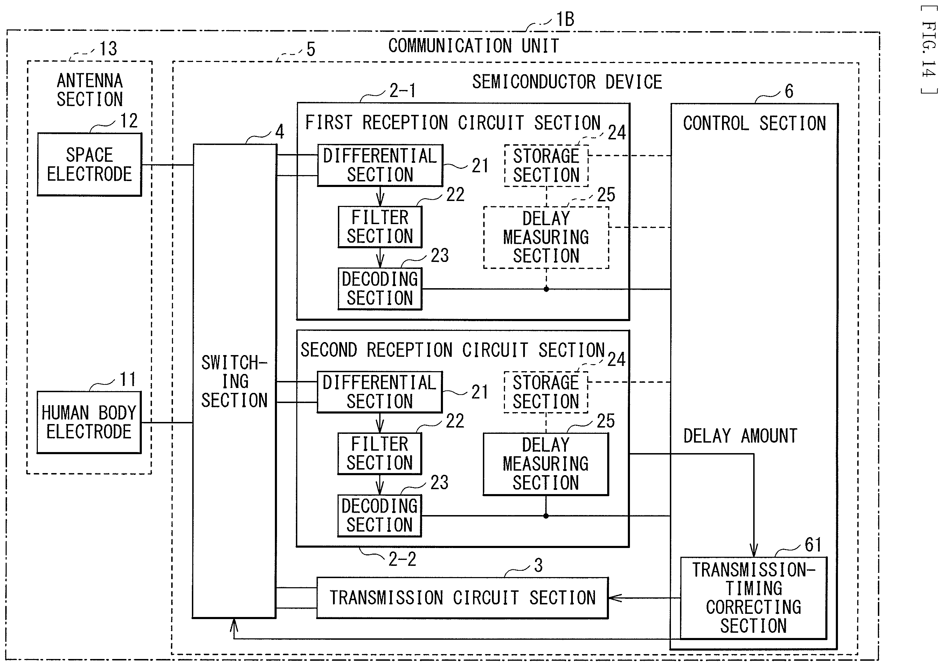

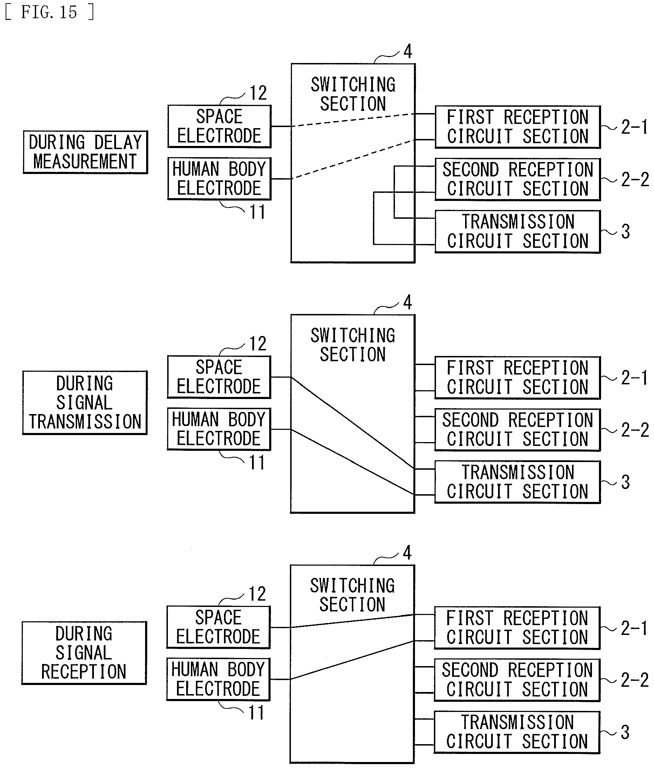

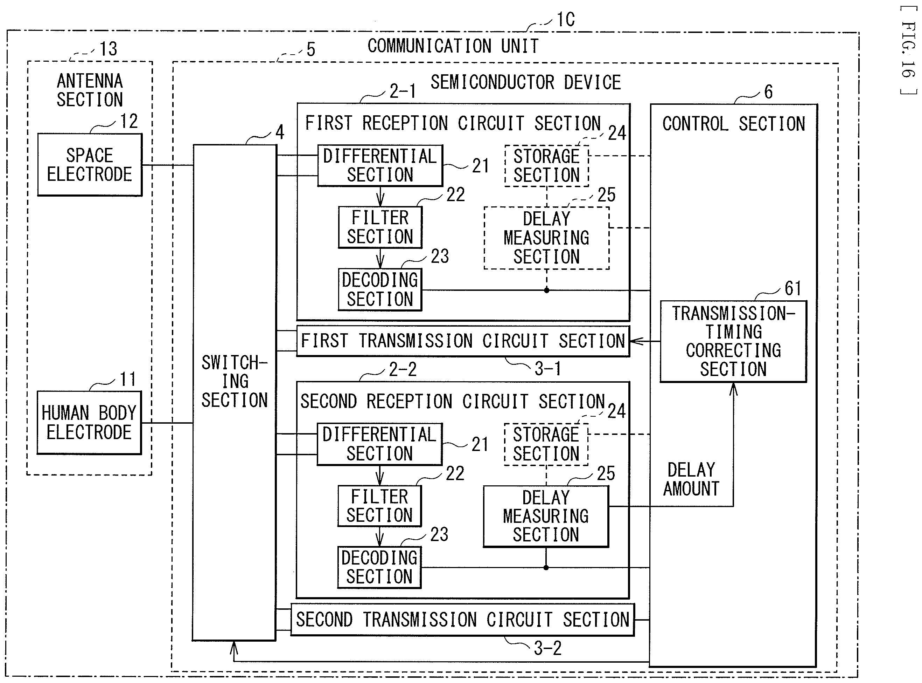

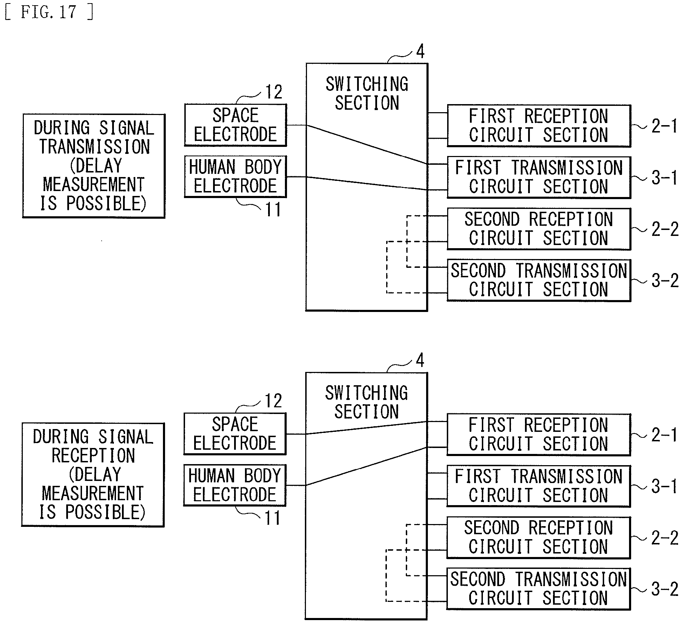

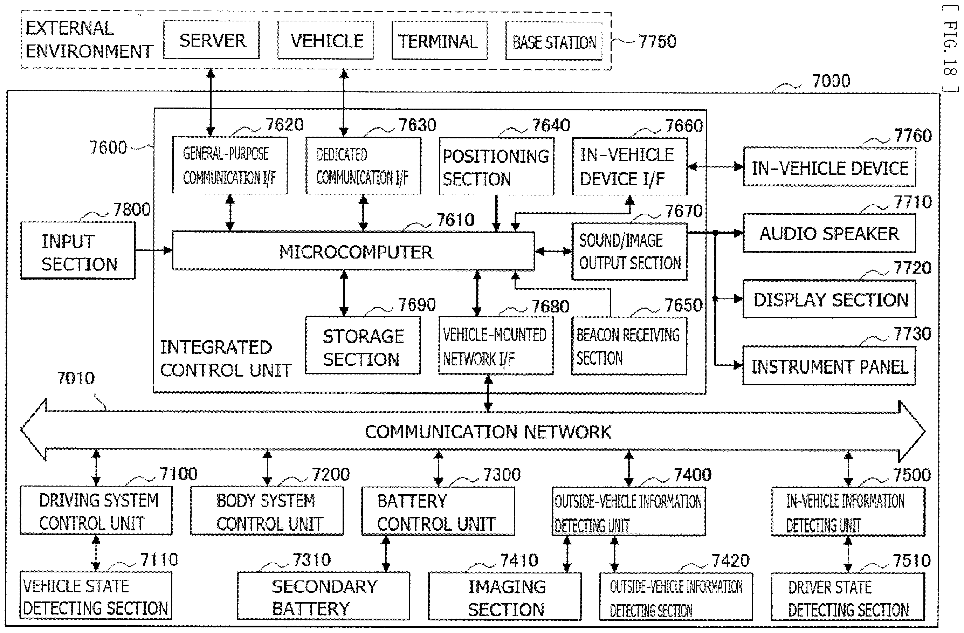

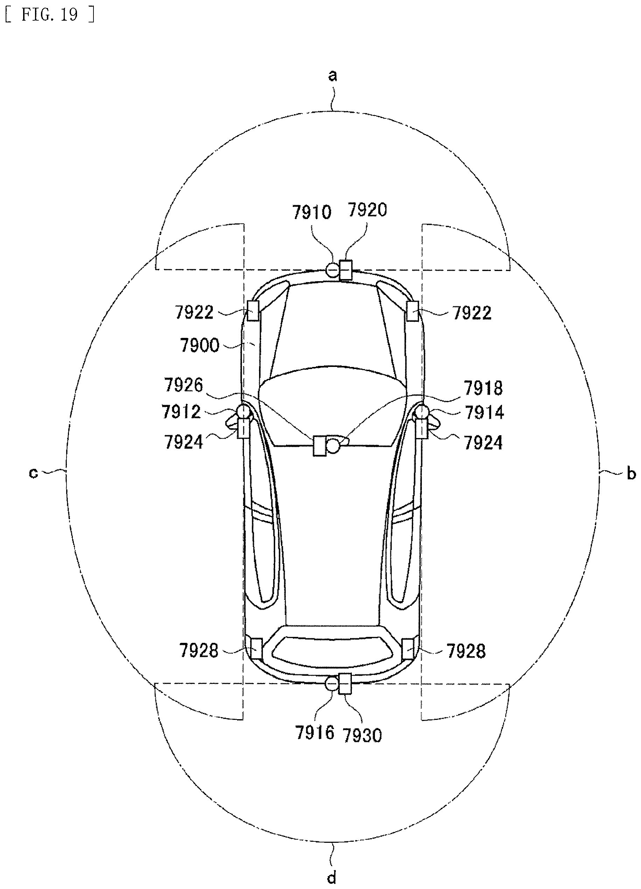

In the following, some embodiments of the present disclosure are described in detail with reference to the drawings. It is to be noted that description is given in the following order.
0. Comparative Example (Outline and Issue of Communication System Using Human Body as Communication Medium) (FIGs. 1 to 4)
1. First Embodiment
   1.1 Configuration (FIGs. 5 and 6)
   1.2 Operation (FIGs. 7 to 9)
   1.3 Effects
2. Second Embodiment
   2.1 Configuration (FIG. 10)
   2.2 Operation (FIGs. 11 and 12)
   2.3 Effects
3. Third Embodiment
   3.1 Configuration and Operation (FIG. 13)
4. Fourth Embodiment
   4.1 Configuration and Operation (FIGs. 14 and 15)
5. Fifth Embodiment
   5.1 Configuration and Operation (FIGs. 16 and 17)
6. Sixth Embodiment (Application Example) (FIGs. 18 and 19)
7. Other Embodiments

### <0. Comparative Example>

### (Outline of Communication System Using Human Body as Communication Medium)

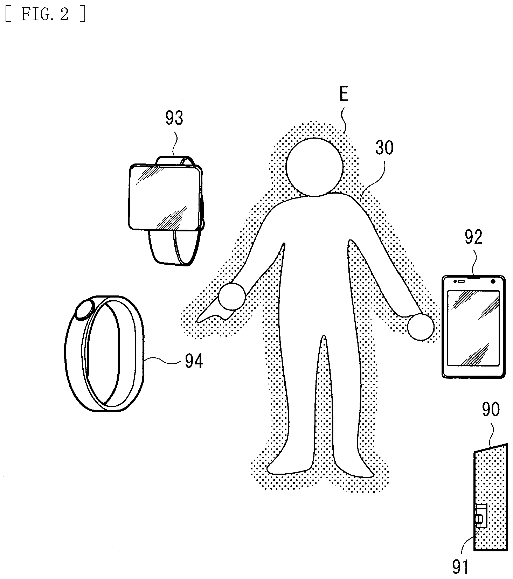

FIGs. 1 and 2 each illustrate an outline of a communication system according to Comparative Example that utilizes an electric field communication technique and uses a human body 30 as a communication medium.

A communication system 100 according to this Comparative Example includes a first communication unit 110 and a second communication unit 120.

The communication system 100 may be utilized for communication between a communication apparatus mounted on a wearable apparatus such as a smart watch 93 and a wristband terminal 94, and a communication apparatus mounted on a doorknob 91 of a door 90, a smartphone 92, etc., as illustrated in, for example, FIG. 2. For example, one of the first communication unit 110 and the second communication unit 120 may be provided at the smart watch 93, etc., and the other may be provided at the smartphone 92, etc. Further, the communication system 100 may be utilized for unlocking, etc. of automobile doors. For example, one of the first communication unit 110 and the second communication unit 120 may be installed in automobile doors. Furthermore, the communication system 100 may also be used for unlocking, etc. of the door 90 with a locking function used for room entry and exit, besides the automobile doors.

The first communication unit 110 includes a first antenna section 115 and a first communication circuit section 113. The first antenna section 115 includes, as communication electrodes, a first human body electrode 111 and a first space electrode 112. The first communication circuit section 113 is coupled to a host 114.

The second communication unit 120 includes a second antenna section 125 and a second communication circuit section 123. The second antenna section 125 includes, as communication electrodes, a second human body electrode 121 and a second space electrode 122. The second communication circuit section 123 is coupled to a host 124.

The first communication circuit section 113 and the second communication circuit section 123 each include a communication circuit employing an electric field communication method (a quasi-electrostatic field communication method).

The first communication circuit section 113 may include at least a transmission circuit (a transmitter). The second communication circuit section 123 may include at least a reception circuit (a receiver). Further, the first communication circuit section 113 and the second communication circuit section 123 may each include a transmitter-receiver circuit, and two-way communication may be possible between the first communication unit 110 and the second communication unit 120.

In a case where a signal is transmitted from the first communication unit 110, the first communication circuit section 113 generates a transmitting signal of a potential difference including a signal modulated by a predetermined modulation system, between the first human body electrode 111 and the first space electrode 112. The first human body electrode 111 is disposed on side closer to the human body 30 than the first space electrode 112. The first human body electrode 111 is thereby disposed to have stronger capacitive coupling to the communication medium (the human body 30) than the first space electrode 112.

In this communication system, by bringing a portion of the human body 30 closer to the second human body electrode 121 than to the second space electrode 122, a human-body-side communication path that uses the human body 30 as a communication medium is formed between the first human body electrode 111 and the second human body electrode 121. In addition, a space-side communication path that uses a space (e.g., air) as a communication medium is formed between the first space electrode 112 and the second space electrode 122.

A potential difference corresponding to a sending signal transmitted through the human-body-side communication path and the space-side communication path is generated between the second human body electrode 121 and the second space electrode 122. The second communication circuit section 123 detects the potential difference generated between the second human body electrode 121 and the second space electrode 122, performs demodulation processing corresponding to the modulation system of the first communication circuit section 113 to generate a reception signal, and outputs the reception signal as an output signal.

In the electric field communication method (the quasi-electrostatic field communication method), strong coupling between the human body electrodes enables the first communication unit 110 and the second communication unit 120 to perform communication therebetween. The first communication unit 110 and the second communication unit 120 are able to perform communication when a person comes into contact with the human body electrodes; however, even when the person comes close to the human body electrodes, an electric field E is distributed over a surface of the human body as illustrated in FIG. 2, which enables the communication to be performed. Accordingly, the communication is possible only in the immediate vicinity of the human body 30. This method is also highly compatible with a wearable device.

### (Transmission Format)

Examples of a standard of the electric field communication as described above include ISO/IEC 17982 CCCC PHY (Closed Capacitive Coupling Communication Physical Layer). The ISO/IEC 17982 CCCC PHY (hereinafter referred to as CCCC-PHY) adopts automatic retransmission control (ARQ; Automatic Repeat reQuest) using an error detecting code and retransmission control.

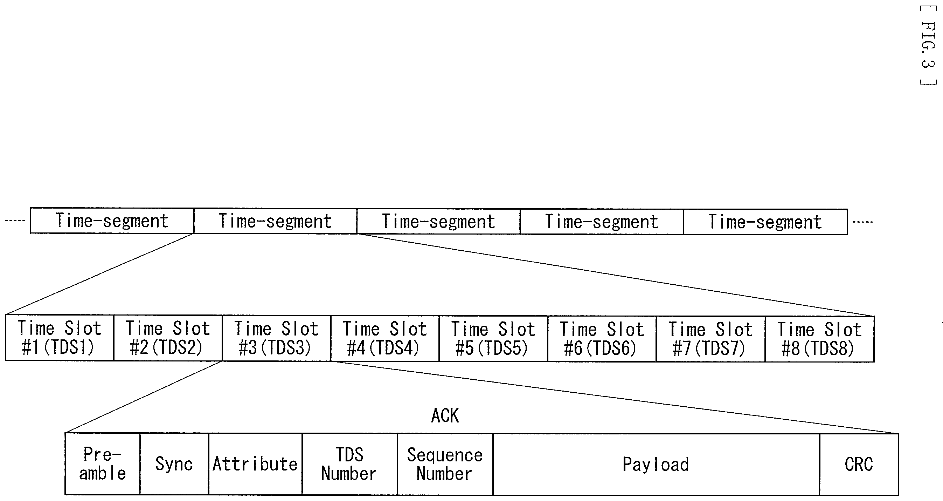

FIG. 3 illustrates an example of a transmission format according to the CCCC-PHY standards.

In the CCCC-PHY standards, transmission data are transmitted between a communicated unit (for example, the first communication unit 110) and a communication unit (for example, the second communication unit 120), in each time-segment (Time-segment) having a predetermined interval. One time-segment is configured by a predetermined division number of a plurality of time slots (Time Slot, TDS (Time Division Slot)).

For example, transmission data divided into head data and one or more of subsequent data are sent from the communicated unit. The communication unit receives the transmission data from the communicated unit over a period of a plurality of time-segments. The transmission data from the communicated unit is transmitted in a period of one time slot of the plurality of time slots, in each of the plurality of time-segments. In a case where there exist a plurality of communicated units or a plurality of communication units, different time slots are assigned to the respective units within one time-segment. The time slots are assigned by the communicated unit or the communication unit that starts the communication first.

The transmission data transmitted in a period of one time slot is packet data. The packet data includes preamble (Pre-amble), synch (Sync) data, attribute (Attribute) data, a TDS Number, and a Sequence Number (a number for retransmission). Furthermore, the packet data includes Payload, which is real data of the transmission data, and a cyclic redundancy check (CRC) as an error detection code.

The communication unit identifies a time slot of the communicated unit on the basis of a result of CRC decoding. The communication unit determines whether or not it is a communication terminal that the communication unit itself desires to communicate with in accordance with a Payload portion of the transmission data of which the CRC decoding has been performed successfully. The communication unit transmits data using a time slot assigned by the communicated unit. For example, in a case where the communication unit receives transmission data from the communicated unit, the communication unit sends, back to the communicated unit, acknowledgment (ACK) indicating that the transmission data has been normally received within a period of the same time-segment as the time-segment in which the received transmission data has been transmitted. In this case, the communication unit transmits an incremented Sequence Number of the communicated unit as a Sequence Number of transmission data to be sent back.

### (Issue)

In a communication system of the CCCC-PHY standards as described above, as for time slots other than respective time slots assigned to one communicated unit and one communication unit in a period of one time-segment, another communicated unit and another communication unit may perform communication. To prevent signal interference between these units, it is necessary to appropriately keep maintaining the timing of a time slot between the units.

However, in the CCCC-PHY standards, definite management information on the timing of a time slot does not exist. In a case where a preceding communicated unit already exists on a transmission path, the communication unit needs to fit a time slot of its own to the timing of a time slot generated by the preceding communicated unit. In a case where a preceding communicated unit does not exist, the communication unit generates the timing of a time slot by itself.

Meanwhile, in a case of communication using the human body 30 as a communication medium, since a signal delay of the transmission path is little, a circuit delay of the reception circuit section in the communication unit is non-negligible. In a case of fitting the timing to a time slot generated by the preceding communicated unit, it may be necessary to consider the circuit delay of the reception circuit section in the communication unit.

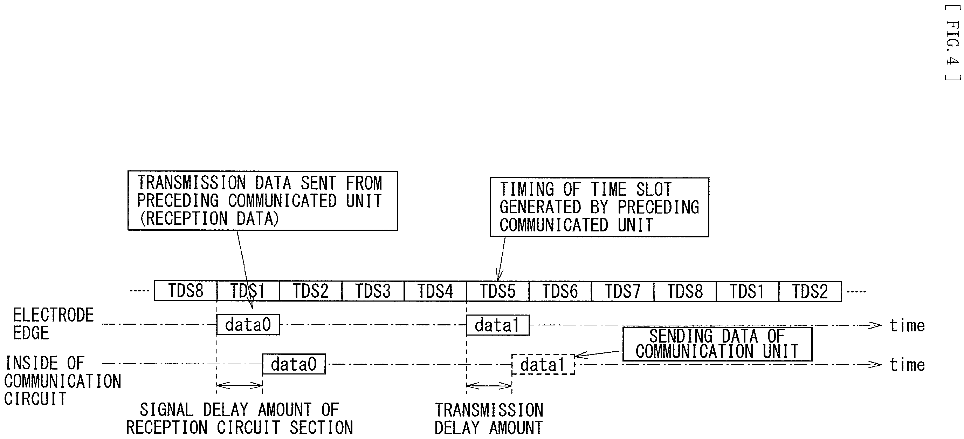

For example, as illustrated in FIG. 4, the communication unit receives, as reception data, transmission data sent from the preceding communicated unit, and sends, from the communication unit, sending data at timing of a time slot based on the reception data. In this case, a transmission delay corresponding to a signal delay amount of the reception circuit section may be generated in timing of the transmission from the communication unit.

From those described above, it is desired to develop a technique that makes it possible to correct an influence of a circuit delay of a reception circuit section in a communication unit and a communication system based on the CCCC-PHY standards. For example, it is desired to develop a technique that makes it possible to correct a delay in timing to transmit transmission data caused by a circuit delay of the reception circuit section.

### <1. First Embodiment>

### [1.1 Configuration]

FIG. 5 schematically illustrates a configuration example of a communication unit 1 according to a first embodiment of the present disclosure.

The communication unit 1 according to the present embodiment may be applied to one or both of the first communication unit 110 and the second communication unit 120 in the communication system 100 according to Comparative Example described above. In this case, the first communication unit 110 and the second communication unit 120 may be a transmitter-receiver that transmits and receives data in a two-way fashion. For example, the communicated unit that communicates with the communication unit 1 according to the present embodiment may be set as the first communication unit 110, and the communication unit 1 according to the present embodiment may be set as the second communication unit 120.

The communication unit 1 according to the present embodiment is able to perform communication in the above-described transmission format based on the CCCC-PHY standards illustrated in FIG. 3.

The communication unit 1 according to the present embodiment includes an antenna section 13, a reception circuit section 2 that receives reception data from the communicated unit through the antenna section 13, and a transmission circuit section 3 that transmits transmission data to the communicated unit through the antenna section. Further, the communication unit 1 includes a switching section 4 provided between the antenna section 13 and the reception and transmission circuit sections 2 and 3, and a control section 6 that controls the switching section 4, the reception circuit section 2, and the transmission circuit section 3.

The antenna section 13 corresponds to, for example, the above-described second antenna section 125 of the second communication unit 120 in FIG. 1. The antenna section 13 includes a human body electrode 11 as a first electrode and a space electrode 12 as a second electrode. The human body electrode 11 corresponds to, for example, the above-described second human body electrode 121 of the second communication unit 120 in FIG. 1. The space electrode 12 corresponds to, for example, the above-described second space electrode 122 of the second communication unit 120 in FIG. 1.

The reception circuit section 2, the transmission circuit section 3, the switching section 4, and the control section 6 may be provided in one semiconductor device (IC (Integrated Circuit)) 5.

The reception circuit section 2 and the transmission circuit section 3 are each a communication circuit section that transmits transmission data to the communicated unit in each time-segment configured by a predetermined division number of the plurality of time slots.

The reception circuit section 2 includes a differential section 21, a filter section 22, a decoding section 23, and a delay measuring section 25.

Reception data of a differential signal is inputted to the differential section 21 through the human body electrode 11 and the space electrode 12.

The switching section 4 is able to switch electrical coupling relationships between the antenna section 13, the reception circuit section 2, and the transmission circuit section 3. The switching section 4 is coupled to the differential section 21, and is able to switch the electrical coupling relationship between the antenna section 13 and the reception circuit section 2 through the differential section 21. Further, the switching section 4 is able to switch the electrical coupling relationship between the transmission circuit section 3 and the reception circuit section 2 through the differential section 21.

The delay measuring section 25 measures a signal delay amount of the reception circuit section 2.

The control section 6 performs switching control of the switching section 4 depending on a transmission and reception state.

The control section 6 includes a transmission-timing correcting section 61. The transmission-timing correcting section 61 corrects timing for the transmission circuit section 3 to transmit transmission data on the basis of the signal delay amount.

### [1.2 Operation]

FIG. 6 schematically illustrates an example of the switching control of the switching section 4 in the communication unit 1.

In a case where the delay measuring section 25 measures a signal delay amount (at the time of delay measurement), as illustrated in an upper part of FIG. 6, the control section 6 controls the switching section 4 to cause the reception circuit section 2 and the transmission circuit section 3 to be electrically coupled to each other. Furthermore, the control section 6 controls the switching section 4 to cause the reception circuit section 2 and the transmission circuit section 3 to be electrically isolated from the antenna section 13. In this state, a signal for delay measurement is transmitted from the transmission circuit section 3. The reception circuit section 2 receives the signal for delay measurement from the transmission circuit section 3. The delay measuring section 25 measures a signal delay amount (a circuit delay of the reception circuit section 2) on the basis of the received signal for delay measurement. At this time, the antenna section 13 is electrically isolated from the reception circuit section 2 and the transmission circuit section 3, and therefore it is possible to prevent the signal for delay measurement from being carelessly transmitted to the outside.

In a case where the transmission circuit section 3 transmits transmission data to the communicated unit (at the time of signal transmission), as illustrated in a middle part of FIG. 6, the control section 6 controls the switching section 4 to cause the antenna section 13 and the transmission circuit section 3 to be electrically coupled to each other. Furthermore, the control section 6 controls the switching section 4 to cause the transmission circuit section 3 and the reception circuit section 2 to be electrically isolated from each other.

In a case where the reception circuit section 2 receives reception data from the communicated unit (at the time of signal reception), as illustrated in a lower part of FIG. 6, the control section 6 controls the switching section 4 to cause the antenna section 13 and the reception circuit section 2 to be electrically coupled to each other. Furthermore, the control section 6 controls the switching section 4 to cause the reception circuit section 2 and the transmission circuit section 3 to be electrically isolated from each other.

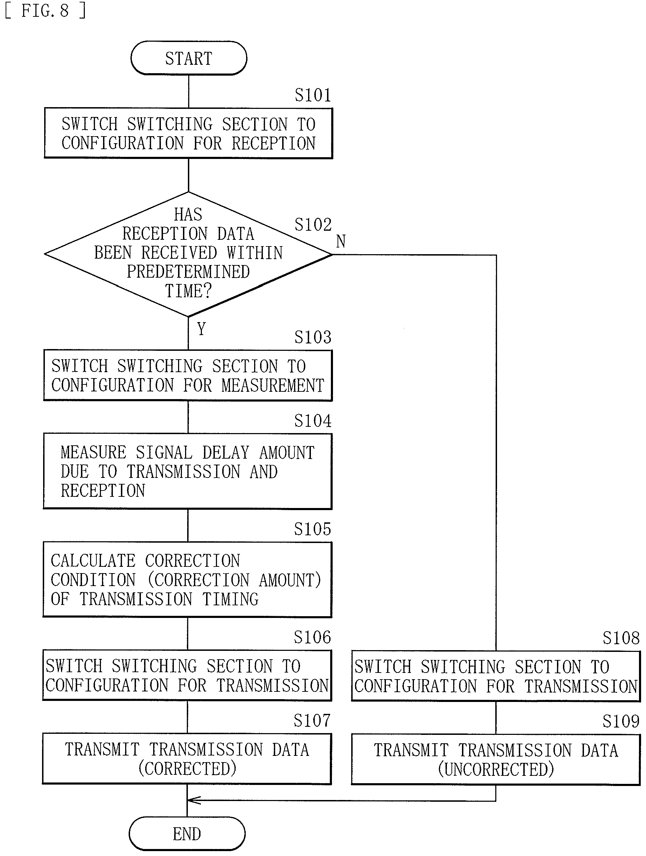

FIG. 7 illustrates an outline of transmission control in the communication unit 1. FIG. 8 illustrates an example of a control flow about the transmission control in the present embodiment.

The control section 6 first switches the switching section 4 to a configuration for receiving reception data from the communicated unit as illustrated in the lower part of FIG. 6 (step S101). Next, the control section 6 determines whether or not reception data from the communicated unit has been received within a predetermined time (step S102). Here, to avoid the occurrence of an infinite loop due to mutual delay correction with the communicated unit, the presence or absence of reception data is checked first. It is desirable to check the presence or absence of reception data, for example, in a period of at least one time slot.

In a case where reception data from the communicated unit has not been received within the predetermined time (step S102; N), then, the control section 6 switches the switching section 4 to a configuration for transmitting transmission data to the communicated unit as illustrated in the middle part of FIG. 6 (step S108). Next, the transmission circuit section 3 transmits transmission data of which the transmission timing is uncorrected to the communicated unit (step SI09).

Meanwhile, in a case where reception data from the communicated unit has been received within the predetermined time (step S102; Y), the control section 6 next switches the switching section 4 to a configuration for measuring a signal delay amount as illustrated in the upper part of FIG. 6 (step S103). In this state, the communication unit 1 performs transmission and reception of a signal for delay measurement. In the reception circuit section 2, the delay measuring section 25 measures a signal delay amount on the basis of the received signal for delay measurement (step S104). Next, the transmission-timing correcting section 61 calculates a correction condition (a correction amount) of timing for the transmission circuit section 3 to transmit transmission data on the basis of the measured signal delay amount (step S105). Next, the control section 6 switches the switching section 4 to the configuration for transmitting transmission data to the communicated unit as illustrated in the middle part of FIG. 6 (step S106). In this state, the transmission circuit section 3 transmits, to the communicated unit, the transmission data of which the transmission timing has been corrected (step S107). Accordingly, the communication unit 1 is able to transmit the transmission data in accordance with the timing of a time slot generated by a preceding communicated unit, taking into consideration a processing delay amount of the reception circuit section 2 as illustrated in FIG. 7.

It is to be noted that a period of steps S103 to S105 is a period in which transmission and reception of transmission data with the communicated unit is unable to be performed. It is desirable that the processes at steps S103 to S105 be performed in a period of one time slot.

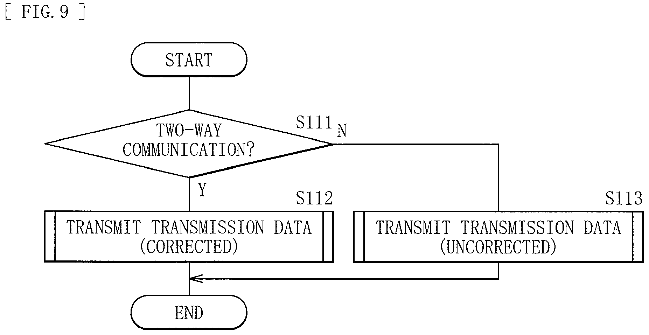

FIG. 9 illustrates an example of a control flow about the transmission control in the present embodiment.

The communication unit 1 first may determine whether or not communication with the communicated unit is two-way communication (Full duplex) (step S111). In a case where the communication is two-way communication (step S111; Y), then, the communication unit 1 may enable transmission-timing correction processing and transmit, to the communicated unit, transmission data of which the transmission timing has been corrected (step S112). In a case where the communication is not two-way communication (step S111; N), such as a case where the communication is one-way communication (Broadcast) or a case where no communication is required, the communication unit 1 may disable transmission-timing correction processing and transmit, to the communicated unit, transmission data of which the transmission timing is uncorrected (step SI13). Accordingly, in a case where the communication is not two-way communication, transmission-timing correction processing is not enabled; therefore, it is possible to reduce the number of switchings of the switching section 4. This makes it possible to achieve lower power consumption and a longer life.

### [1.3 Effects]

As described above, according to the present embodiment, it is possible to electrically couple the reception circuit section 2 and the transmission circuit section 3, and is possible to measure a signal delay amount of the reception circuit section 2; therefore, it is possible to correct an influence of a circuit delay of the reception circuit section 2. For example, it may be possible to correct a delay in transmission timing of transmission data caused by the circuit delay of the reception circuit section 2.

It is to be noted that the effects described herein are merely illustrative and not limitative, and may have other effects. The same holds true also for effects of other embodiments as described hereinbelow.

### <2. Second Embodiment>

Subsequently, a communication unit according to a second embodiment of the present disclosure is described. It is to be noted that in the following, substantially the same component as a component of the communication unit according to the above-described first embodiment is assigned the same reference numeral, and description of the component is omitted accordingly.

### [2.1 Configuration]

FIG. 10 schematically illustrates a configuration example of a communication unit 1A according to the second embodiment of the present disclosure.

The communication unit 1A according to the present embodiment has a configuration in which a reception circuit section 2A includes a storage section 24, as compared with the configuration of FIG. 5.

The storage section 24 stores therein a signal delay amount measured by the delay measuring section 25.

The transmission-timing correcting section 61 corrects timing for the transmission circuit section 3 to transmit transmission data on the basis of the signal delay amount stored in the storage section 24.

### [2.2 Operation]

FIGs. 11 and 12 illustrate an example of a control flow about transmission control in the present embodiment.

The control section 6 first determines whether or not first reception data from the communicated unit has been received within a predetermined time (step S201).

In a case where first reception data from the communicated unit has not been received within the predetermined time (step S201; N), then, the control section 6 switches the switching section 4 to the configuration for transmitting transmission data to the communicated unit as illustrated in the middle part of FIG. 6. Next, the transmission circuit section 3 transmits, to the communicated unit, first transmission data of which the transmission timing is uncorrected (step S211). Next, the control section 6 determines whether or not subsequent reception data from the communicated unit has been received within the predetermined time (step S212). In a case where subsequent reception data from the communicated unit has not been received within the predetermined time (step S212; N), the transmission circuit section 3 retransmits the previous transmission data to the communicated unit (step S215). Next, the control section 6 moves on to a process at step S214. In a case where the subsequent reception data from the communicated unit has been received within the predetermined time (step S212; Y), the subsequent transmission data of which the transmission timing is uncorrected is transmitted to the communicated unit (step S213). Next, the control section 6 determines whether or not transmission data meets a termination condition, such as a condition that transmission data is the last data (step S214). In a case where the transmission data does not meet the termination condition (step S214; N), the control section 6 returns to the process at step S212. In a case where the transmission data meets the termination condition (step S214; Y), the control section 6 terminates the process.

Meanwhile, in a case where the first reception data from the communicated unit has been received within the predetermined time (step S201; Y), then, the control section 6 switches the switching section 4 to the configuration for measuring a signal delay amount as illustrated in the upper part of FIG. 6. In this state, the communication unit 1A performs transmission and reception of a signal for delay measurement. In the reception circuit section 2A, the delay measuring section 25 measures a signal delay amount on the basis of the received signal for delay measurement. Next, the storage section 24 stores therein the signal delay amount measured by the delay measuring section 25 (step S202). Next, the transmission-timing correcting section 61 calculates a correction condition (a correction amount) of timing for the transmission circuit section 3 to transmit transmission data on the basis of the signal delay amount stored in the storage section 24, and corrects the transmission timing (step S203). Next, the control section 6 switches the switching section 4 to the configuration for transmitting transmission data to the communicated unit as illustrated in the middle part of FIG. 6. In this state, the transmission circuit section 3 transmits, to the communicated unit, first transmission data of which the transmission timing has been corrected (step S204).

Next, the control section 6 determines whether or not subsequent reception data from the communicated unit has been received within the predetermined time (step S205). In a case where the subsequent reception data from the communicated unit has not been received within the predetermined time (step S205; N), the transmission-timing correcting section 61 calculates a correction condition (a correction amount) of timing for the transmission circuit section 3 to transmit transmission data on the basis of the signal delay amount stored in the storage section 24, and corrects the transmission timing (step S209). Next, the transmission circuit section 3 retransmits, to the communicated unit, the previous transmission data of which the transmission timing has been corrected (step S210). Next, the control section 6 moves on to a process at step S208.

In a case where the subsequent reception data from the communicated unit has been received within the predetermined time (step S205; Y), the transmission-timing correcting section 61 calculates a correction condition (a correction amount) of timing for the transmission circuit section 3 to transmit transmission data on the basis of the signal delay amount stored in the storage section 24, and corrects the transmission timing (step S206). Next, the transmission circuit section 3 transmits, to the communicated unit, the subsequent transmission data of which the transmission timing has been corrected (step S207). Next, the control section 6 determines whether or not the transmission data meets the termination condition, such as a condition that transmission data is the last data (step S208). In a case where the transmission data does not meet the termination condition (step S208; N), the control section 6 returns to the process at step S205. In a case where transmission data meets the termination condition (step S208; Y), the control section 6 terminates the process.

### [2.3 Effects]

As described above, according to the present embodiment, a delay in transmission timing is corrected on the basis of the signal delay amount stored in the storage section 24; therefore, it is possible to reduce the number of switchings of the switching section 4. Accordingly, it is possible to achieve lower power consumption, a longer life, and improvement in reception efficiency.

The other configurations, operations, and effects may be substantially similar to those of the communication unit 1 according to the above-described first embodiment.

### <3. Third Embodiment>

Subsequently, a communication unit according to a third embodiment of the present disclosure is described. It is to be noted that in the following, substantially the same component as a component of the communication unit according to the above-described first or second embodiment is assigned the same reference numeral, and description of the component is omitted accordingly.

### [3.1 Configuration and Operation]

The communication unit according to the present embodiment may have a configuration substantially similar to the configuration of FIG. 5.

FIG. 13 illustrates an example of a control flow about transmission control in the present embodiment.

In the above-described second embodiment, first, a signal delay amount measured by the delay measuring section 25 is stored in the storage section 24, and transmission timing of subsequent transmission data is corrected on the basis of the signal delay amount stored in the storage section 24. On the other hand, in the present embodiment, a signal delay amount is measured by the delay measuring section 25 every time, and transmission timing of subsequent transmission data is corrected on the basis of the signal delay amount measured by the delay measuring section 25. In the present embodiment, a correction condition is calculated every time, thus a signal delay may be corrected reliably even when there is a change in a communication environment or something.

The control section 6 first determines whether or not first reception data from the communicated unit has been received within a predetermined time (step S301).

In a case where the first reception data from the communicated unit has not been received within the predetermined time (step S301; N), processes substantially similar to the processes at steps S211 to 215 in FIG. 12 may be performed.

Meanwhile, in a case where the first reception data from the communicated unit has been received within the predetermined time (step S301; Y), then, the control section 6 switches the switching section 4 to the configuration for measuring a signal delay amount as illustrated in the upper part of FIG. 6. In this state, the communication unit 1 performs transmission and reception of a signal for delay measurement. In the reception circuit section 2, the delay measuring section 25 measures a signal delay amount on the basis of the received signal for delay measurement (step S302). Next, the transmission-timing correcting section 61 calculates a correction condition (a correction amount) of timing for the transmission circuit section 3 to transmit transmission data on the basis of the measured signal delay amount, and corrects the transmission timing (step S303). Next, the control section 6 switches the switching section 4 to the configuration for transmitting transmission data to the communicated unit as illustrated in the middle part of FIG. 6. In this state, the transmission circuit section 3 transmits, to the communicated unit, first transmission data of which the transmission timing has been corrected (step S304).

Next, the control section 6 determines whether or not the subsequent reception data from the communicated unit has been received within the predetermined time (step S305). In a case where the subsequent reception data from the communicated unit has not been received within the predetermined time (step S305; N), the transmission-timing correcting section 61 calculates a correction condition (a correction amount) of timing for the transmission circuit section 3 to transmit transmission data on the basis of the measured signal delay amount, and corrects the transmission timing (step S310). Next, the transmission circuit section 3 retransmits, to the communicated unit, the previous transmission data of which the transmission timing has been corrected (step S311). Next, the control section 6 moves on to a process at step S309.

In a case where the subsequent reception data from the communicated unit has been received within the predetermined time (step S305; Y), then, the control section 6 switches the switching section 4 to the configuration for measuring a signal delay amount as illustrated in the upper part of FIG. 6. In this state, the communication unit 1 performs transmission and reception of a signal for delay measurement. In the reception circuit section 2, the delay measuring section 25 measures a signal delay amount on the basis of the received signal for delay measurement (step S306). Next, the transmission-timing correcting section 61 calculates a correction condition (a correction amount) of timing for the transmission circuit section 3 to transmit transmission data on the basis of the measured signal delay amount, and corrects the transmission timing (step S307). Next, the transmission circuit section 3 transmits, to the communicated unit, the subsequent transmission data of which the transmission timing has been corrected (step S308). Next, the control section 6 determines whether or not the transmission data meets a termination condition, such as a condition that the transmission data is the last data (step S309). In a case where the transmission data does not meet the termination condition (step S309; N), the control section 6 returns to the process at step S305. In a case where transmission data meets the termination condition (step S309; Y), the control section 6 terminates the process.

The other configurations, operations, and effects may be substantially similar to those of the communication unit 1 or 1A according to the above-described first or second embodiment.

### <4. Fourth Embodiment>

Subsequently, a communication unit according to a fourth embodiment of the present disclosure is described. It is to be noted that in the following, substantially the same component as a component of the communication unit according to any of the above-described first to third embodiments is assigned the same reference numeral, and description of the component is omitted accordingly.

### [4.1 Configuration and Operation]

FIG. 14 schematically illustrates a configuration example of a communication unit 1B according to the fourth embodiment of the present disclosure. FIG. 15 schematically illustrates an example of switching control by the switching section 4 in the present embodiment.

The communication unit 1B according to the present embodiment includes two reception circuit sections (a first reception circuit section 2-1 and a second reception circuit section 2-2) that correspond to the reception circuit section 2 in the configuration of FIG. 5. It is to be noted that the first reception circuit section 2-1 and the second reception circuit section 2-2 may each include the storage section 24 substantially as with the reception circuit section 2A in the configuration of FIG. 10.

The first reception circuit section 2-1 and the second reception circuit section 2-2 may each include the delay measuring section 25 substantially as with the reception circuit section 2 in the configuration of FIG. 5. However, the delay measuring section 25 in either the first reception circuit section 2-1 or the second reception circuit section 2-2 may be omitted. In the following, there is described an example of a configuration in which at least the second reception circuit section 2-2 includes the delay measuring section 25.

Respective signal delay amounts of the first reception circuit section 2-1 and the second reception circuit section 2-2 may be substantially the same. A signal delay amount measured by the delay measuring section 25 of the second reception circuit section 2-2 may be considered as a signal delay amount of the first reception circuit section 2-1.

In a case where a signal delay amount is measured (at the time of delay measurement), as illustrated in an upper part of FIG. 15, the control section 6 controls the switching section 4 to cause the second reception circuit section 2-2 and the transmission circuit section 3 to be electrically coupled to each other. Furthermore, the control section 6 controls the switching section 4 to cause the second reception circuit section 2-2 and the transmission circuit section 3 to be electrically isolated from the antenna section 13. In this state, a signal for delay measurement is transmitted from the transmission circuit section 3. The second reception circuit section 2-2 receives the signal for delay measurement from the transmission circuit section 3. The delay measuring section 25 measures a signal delay amount (a circuit delay of the second reception circuit section 2-2) on the basis of the received signal for delay measurement. Considering the signal delay amount as a signal delay amount of the first reception circuit section 2-1, the transmission-timing correcting section 61 may correct timing for the transmission circuit section 3 to transmit transmission data. At this time, the control section 6 may control the switching section 4 to cause the antenna section 13 and the first reception circuit section 2-1 to be electrically coupled to each other. This enables the first reception circuit section 2-1 to receive reception data even in a period in which a signal delay amount is measured in the second reception circuit section 2-2.

In a case where the transmission circuit section 3 transmits transmission data to the communicated unit (at the time of signal transmission), as illustrated in a middle part of FIG. 15, the control section 6 controls the switching section 4 to cause the antenna section 13 and the transmission circuit section 3 to be electrically coupled to each other. Furthermore, the control section 6 controls the switching section 4 to cause the transmission circuit section 3 to be electrically isolated from the first reception circuit section 2-1 and the second reception circuit section 2-2.

In a case where reception data from the communicated unit is received (at the time of signal reception), as illustrated in a lower part of FIG. 15, the control section 6 controls the switching section 4 to cause the antenna section 13 and the first reception circuit section 2-1 to be electrically coupled to each other. Furthermore, the control section 6 controls the switching section 4 to cause the first reception circuit section 2-1 and the second reception circuit section 2-2 to be electrically isolated from the transmission circuit section 3.

The other configurations, operations, and effects may be substantially similar to those of the communication unit according to any of the above-described first to third embodiments.

### <5. Fifth Embodiment>

Subsequently, a communication unit according to a fifth embodiment of the present disclosure is described. It is to be noted that in the following, substantially the same component as a component of the communication unit according to any of the above-described first to fourth embodiments is assigned the same reference numeral, and description of the component is omitted accordingly.

### [5.1 Configuration and Operation]

FIG. 16 schematically illustrates a configuration example of a communication unit 1C according to the fifth embodiment of the present disclosure. FIG. 17 schematically illustrates an example of switching control by the switching section 4 in the present embodiment.

The communication unit 1C according to the present embodiment further includes two transmission circuit sections (a first transmission circuit section 3-1 and a second transmission circuit section 3-2) that correspond to the transmission circuit section 3, as compared with the configuration of FIG. 14. Thus, for example, the first reception circuit section 2-1 and the first transmission circuit section 3-1 may be set as a communication circuit section that dedicatedly performs transmission and reception of transmission data with the communicated unit. Furthermore, the second reception circuit section 2-2 and the second transmission circuit section 3-2 may be set as a communication circuit section that dedicatedly performs measurement of a signal delay amount. This makes it possible to perform transmission and reception of transmission data with the communicated unit all the time while performing measurement of a signal delay amount.

In a case where transmission data is transmitted to the communicated unit (at the time of signal transmission), as illustrated in an upper part of FIG. 17, the control section 6 controls the switching section 4 to cause the antenna section 13 and the first transmission circuit section 3-1 to be electrically coupled to each other.

In a case where reception data is received from the communicated unit (at the time of signal reception), as illustrated in a lower part of FIG. 17, the control section 6 controls the switching section 4 to cause the antenna section 13 and the first reception circuit section 2-1 to be electrically coupled to each other.

At the time of signal transmission and the time of signal transmission, the control section 6 may control the switching section 4 to cause the second reception circuit section 2-2 and the second transmission circuit section 3-2 to be electrically coupled to each other at any timing. In this state, a signal for delay measurement is transmitted from the second transmission circuit section 3-2. The second reception circuit section 2-2 receives the signal for delay measurement from the second transmission circuit section 3-2. The delay measuring section 25 measures a signal delay amount (a circuit delay of the second reception circuit section 2-2) on the basis of the received signal for delay measurement. Considering the signal delay amount as a signal delay amount of the first reception circuit section 2-1, the transmission-timing correcting section 61 may correct timing for the first transmission circuit section 3-1 to transmit transmission data.

The other configurations, operations, and effects may be substantially similar to those of the communication unit according to any of the above-described first to fourth embodiments.

### <6. Sixth Embodiment (Application Examples)>

The technology according to the present disclosure is applicable to various products. For example, the technology according to the present disclosure may be realized as an apparatus mounted to any kind of moving bodies such as a vehicle, an electric vehicle, a hybrid electric vehicle, a motorcycle, a bicycle, a persona mobility, an aircraft, a drone, a watercraft, a robot, construction equipment, and agricultural machinery (tractor).

It is to be noted that, in the following descriptions, GSM and HDMI are registered trademarks.

FIG. 18 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 18, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay, or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 18 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

FIG. 198 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 19 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 18, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM), worldwide interoperability for microwave access (WiMAX), long term evolution (LTE)), LTE-advanced (LTE-A), or the like, or another wireless communication protocol such as wireless LAN (referred to also as wireless fidelity (Wi-Fi), Bluetooth, or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth, near field communication (NFC), or wireless universal serial bus (WUSB). In addition, the in-vehicle device I/F 7660 may establish wired connection by universal serial bus (USB), high-definition multimedia interface (HDMI), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 18, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 18 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

In the vehicle control system 7000 as described above, the terminal apparatus and the apparatus system according to the present disclosure are applicable to, for example, communication with the external environment 7750 such as a terminal that is present close to the vehicle via the general-purpose communication I/F 7620. Further, the terminal apparatus and the apparatus system according to the present disclosure are applicable to communication with the in-vehicle device 7760 such as a mobile device or a wearable device possessed by an occupant via the in-vehicle device 7760.

### <7. Other Embodiments>

The technique according to the present disclosure is not limited to the descriptions of the foregoing embodiments, and may be modified in a variety of ways.

For example, each component in the foregoing embodiments may be divided into a plurality of subcomponents, and the divided subcomponents may have different functions.

Furthermore, for example, in the control flow in each of the foregoing embodiments, a control flow in which some of process steps are omitted may be executed. Moreover, a control flow in which another process step not described in the control flow is added may be executed. Furthermore, a control flow in which the order of process steps defined in the control flow is partially changed may be executed.

For example, the present technology may have the following configurations.
(1) A communication unit including:
   an antenna section;
   a reception circuit section that receives reception data from a communicated unit through the antenna section;
   a transmission circuit section that transmits transmission data to the communicated unit through the antenna section;
   a switching section that switches electrical coupling relationships between the antenna section, the reception circuit section, and the transmission circuit section;
   a measuring section that measures a signal delay amount of the reception circuit section; and
   a control section that, in a case where the measuring section measures the signal delay amount, controls the switching section to cause the reception circuit section and the transmission circuit section to be electrically coupled to each other.
(2) The communication unit according to (1), further including a transmission-timing correcting section that corrects timing for the transmission circuit section to transmit the transmission data on the basis of the signal delay amount.
(3) The communication unit according to (1) or (2), in which the control section controls the switching section:
   in a case where the reception circuit section receives the reception data from the communicated unit, to cause the antenna section and the reception circuit section to be electrically coupled to each other; and
   in a case where the transmission circuit section transmits the transmission data to the communicated unit, to cause the antenna section and the transmission circuit section to be electrically coupled to each other.
(4) The communication unit according to (2), further including a storage section that stores therein the signal delay amount measured by the measuring section.
(5) The communication unit according to (4), further including, in which the transmission-timing correcting section corrects the timing for the transmission circuit section to transmit the transmission data on the basis of the signal delay amount stored in the storage section.
(6) The communication unit according to any one of (1) to (5), in which
   the reception circuit section includes a first reception circuit section and a second reception circuit section, and
   the control section controls the switching section:
   in a case where the reception data from the communicated unit is received, to cause at least the antenna section and the first reception circuit section to be electrically coupled to each other; and
   in a case where the measuring section measures the signal delay amount, to cause at least the second reception circuit section and the transmission circuit section to be electrically coupled to each other.
(7) The communication unit according to (6), further including, in which in a case where the measuring section measures the signal delay amount, the control section controls the switching section to cause the antenna section and the first reception circuit section to be electrically coupled to each other and cause the second reception circuit section and the transmission circuit section to be electrically coupled to each other.
(8) The communication unit according to any one of (1) to (5), in which
   the reception circuit section includes a first reception circuit section and a second reception circuit section,
   the transmission circuit section includes a first transmission circuit section and a second transmission circuit section, and
   in a case where the measuring section measures the signal delay amount, the control section controls the switching section to cause at least the second reception circuit section and the second transmission circuit section to be electrically coupled to each other.
(9) The communication unit according to (8), in which the control section controls the switching section:
   in a case where the reception data from the communicated unit is received, to cause the antenna section and the first reception circuit section to be electrically coupled to each other and cause the second reception circuit section and the second transmission circuit section to be electrically coupled to each other; and
   in a case where the transmission data is transmitted to the communicated unit, to cause the antenna section and the first transmission circuit section to be electrically coupled to each other and cause the second reception circuit section and the second transmission circuit section to be electrically coupled to each other.
(10) The communication unit according to any one of (1) to (9), in which the antenna section includes a first electrode and a second electrode for performing communication using a human body as a communication medium.
(11) The communication unit according to (10), in which
   the reception circuit section includes a differential section to which reception data of a differential signal is inputted through the first electrode and the second electrode, and
   the switching section is able to switch between an electrical coupling relationship between the antenna section and the differential section and an electrical coupling relationship between the transmission circuit section and the differential section.
(12) A communication system including:
   a first communication unit; and
   a second communication unit that transmits transmission data to the first communication unit,
   one or both of the first communication unit and the second communication unit including an antenna section,
   a reception circuit section that receives reception data from the first communication unit or the second communication unit that is a communicated unit through the antenna section,
   a transmission circuit section that transmits transmission data to the communicated unit through the antenna section,
   a switching section that switches electrical coupling relationships between the antenna section, the reception circuit section, and the transmission circuit section,
   a measuring section that measures a signal delay amount of the reception circuit section, and
   a control section that, in a case where the measuring section measures the signal delay amount, controls the switching section to cause the reception circuit section and the transmission circuit section to be electrically coupled to each other.
(13) The communication system according to (12), in which the second communication unit performs communication with the first communication unit using a human body as a communication medium.

This application claims the benefit of Japanese Priority Patent Application JP2016-201751 filed with the Japan Patent Office on October 13, 2016, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A communication unit comprising:
an antenna section;
a reception circuit section that receives reception data from a communicated unit through the antenna section;
a transmission circuit section that transmits transmission data to the communicated unit through the antenna section;
a switching section that switches electrical coupling relationships between the antenna section, the reception circuit section, and the transmission circuit section;
a measuring section that measures a signal delay amount of the reception circuit section; and
a control section that, in a case where the measuring section measures the signal delay amount, controls the switching section to cause the reception circuit section and the transmission circuit section to be electrically coupled to each other.

2. The communication unit according to claim 1, further comprising a transmission-timing correcting section that corrects timing for the transmission circuit section to transmit the transmission data on a basis of the signal delay amount.

3. The communication unit according to claim 1, wherein the control section controls the switching section:
in a case where the reception circuit section receives the reception data from the communicated unit, to cause the antenna section and the reception circuit section to be electrically coupled to each other; and
in a case where the transmission circuit section transmits the transmission data to the communicated unit, to cause the antenna section and the transmission circuit section to be electrically coupled to each other.

4. The communication unit according to claim 2, further comprising a storage section that stores therein the signal delay amount measured by the measuring section.

5. The communication unit according to claim 4, further comprising, wherein the transmission-timing correcting section corrects the timing for the transmission circuit section to transmit the transmission data on a basis of the signal delay amount stored in the storage section.

6. The communication unit according to claim 1, wherein
the reception circuit section includes a first reception circuit section and a second reception circuit section, and
the control section controls the switching section:
in a case where the reception data from the communicated unit is received, to cause at least the antenna section and the first reception circuit section to be electrically coupled to each other; and
in a case where the measuring section measures the signal delay amount, to cause at least the second reception circuit section and the transmission circuit section to be electrically coupled to each other.

7. The communication unit according to claim 6, further comprising, wherein in a case where the measuring section measures the signal delay amount, the control section controls the switching section to cause the antenna section and the first reception circuit section to be electrically coupled to each other and cause the second reception circuit section and the transmission circuit section to be electrically coupled to each other.

8. The communication unit according to claim 1, wherein
the reception circuit section includes a first reception circuit section and a second reception circuit section,
the transmission circuit section includes a first transmission circuit section and a second transmission circuit section, and
in a case where the measuring section measures the signal delay amount, the control section controls the switching section to cause at least the second reception circuit section and the second transmission circuit section to be electrically coupled to each other.

9. The communication unit according to claim 8, wherein the control section controls the switching section:
in a case where the reception data from the communicated unit is received, to cause the antenna section and the first reception circuit section to be electrically coupled to each other and cause the second reception circuit section and the second transmission circuit section to be electrically coupled to each other; and
in a case where the transmission data is transmitted to the communicated unit, to cause the antenna section and the first transmission circuit section to be electrically coupled to each other and cause the second reception circuit section and the second transmission circuit section to be electrically coupled to each other.

10. The communication unit according to claim 1, wherein the antenna section includes a first electrode and a second electrode for performing communication using a human body as a communication medium.

11. The communication unit according to claim 10, wherein
the reception circuit section includes a differential section to which reception data of a differential signal is inputted through the first electrode and the second electrode, and
the switching section is able to switch between an electrical coupling relationship between the antenna section and the differential section and an electrical coupling relationship between the transmission circuit section and the differential section.

12. A communication system comprising:
a first communication unit; and
a second communication unit that transmits transmission data to the first communication unit,
one or both of the first communication unit and the second communication unit including
an antenna section,
a reception circuit section that receives reception data from the first communication unit or the second communication unit that is a communicated unit through the antenna section,
a transmission circuit section that transmits transmission data to the communicated unit through the antenna section,
a switching section that switches electrical coupling relationships between the antenna section, the reception circuit section, and the transmission circuit section,
a measuring section that measures a signal delay amount of the reception circuit section, and
a control section that, in a case where the measuring section measures the signal delay amount, controls the switching section to cause the reception circuit section and the transmission circuit section to be electrically coupled to each other.

13. The communication system according to claim 12, wherein the second communication unit performs communication with the first communication unit using a human body as a communication medium.
